# EUROPEAN PATENT APPLICATION

(11) **EP 2 863 382 A1**
(43) Date of publication of application: **22.04.2015**
(21) Application number: 13807617.9
(22) Date of filing: 14.05.2013
(51) Int. Cl.: G09G 5/00, G06F 3/14, G09G 5/10, G09G 5/36, G09G 5/377

(54) **IMAGE DISPLAY DEVICE, IMAGE DISPLAY PROGRAM, AND IMAGE DISPLAY METHOD**

(30) Priority: 18.06.2012 JP 2012136622
(71) Applicant: Sony Corporation, Tokyo 108-0075 (JP)
(72) Inventor: IWATSU, Takeshi, Tokyo 108-0075 (JP); ISHIKAWA, Hirotaka, Tokyo 108-0075 (JP)
(74) Representative: Müller Hoffmann & Partner
(86) International application number: PCT/JP2013/003067
(87) International publication number: WO 2013/190766

(57) **Abstract**

[Object] To provide an image display apparatus, an image display program, and an image display method capable of securing the user's view

[Solving Means] According to the present technology, an image display apparatus includes a transmissive display, an image generator, and an image display unit. The transmissive display is to be disposed in front of an eye of a user. The image generator generates a displayed-image, the displayed-image being divided into a no-display-area and a display-area, no image being displayed in the no-display-area, an image being displayed in the display-area. The image display unit displays the displayed-image on the transmissive display.

## Description

### Technical Field

The present invention relates to an image display apparatus, an image display program, and an image display method configured to generate an image displayed on a transmissive display.

### Background Art

There is known a head-mounted display, which is structured so as to be fit on the head of a user and includes displays to be disposed in front of the eyes of the user. Some head-mounted displays are non-transmissive head-mounted displays including opaque displays, and others are transmissive head-mounted displays including transparent displays.

For example, Patent Document 1 discloses a "head-mounted display" configured to display characters (subtitles of movie, etc.) on transmissive displays disposed in front of the eyes of a user such that the information overlaps with the user's view.

Patent Document 1: Japanese Patent Application Laid-open No. 2011-53468

### Summary of Invention

### Problem to be solved by the Invention

However, in such a head-mounted display, images displayed on the display may block the user's view. Because of this, a user may only use such a head-mounted display in a safe environment, for example, in a room or the like. However, it is difficult for him to use such a head-mounted display in an environment in which he needs to observe the environment, for example, when he walks, drives a car, or the like.

In view of the above-mentioned circumstances, it is an object of the present technology to provide an image display apparatus, an image display program, and an image display method capable of securing the user's view.

### Means for solving the Problem

An image display apparatus according to an embodiment of the present technology includes a transmissive display, an image generator, and an image display unit.

The transmissive display is to be disposed in front of an eye of a user.

The image generator generates a displayed-image, the displayed-image being divided into a no-display-area and a display-area, no image being displayed in the no-display-area, an image being displayed in the display-area.

The image display unit displays the displayed-image on the transmissive display.

With this configuration, because no image is displayed in the no-display-area of the transmissive display, a user is capable of observing the environment through the no-display-area. Meanwhile, because an image is displayed in the display-area, the user is capable of observing the image. In other words, the user is capable of observing the environment and the image displayed on the transmissive display at the same time.

The image generator may overlap a mask layer with an original image to thereby generate the displayed-image, the original image including displayed-information displayed to a user.

With this configuration, the above-mentioned no-display-area may be the area corresponding to an image-mask of a mask layer out of an original image containing displayed-information. Because the mask layer forcibly applies the image-mask to the original image, a no-display-area is arranged on an original image irrespective of an application, which outputs the original image. The user's view is thus secured.

The image display apparatus may further include an image-taking unit capable of taking an image to thereby obtain a taken-image. The displayed-information may be generated based on the taken-image.

With this configuration, the image display apparatus is capable of generating displayed-information based on information in a taken-image, e.g., character information obtained based on character-recognition, a QR code (registered trademark), and the like, and is capable of displaying the information to a user.

The image generator may generate a semi-transmissive image as the displayed-image.

With this configuration, a user is capable of observing the environment through the display-area and in addition observing the environment through the semi-transmissive image of the display-area. In other words, the image display apparatus is capable of preventing visibility of the environment from being degraded due to a displayed-image.

The image generator may change transmittance of the displayed-image depending on brightness around the image display apparatus.

With this configuration, it is possible to increase user-friendliness of visibility of a displayed-image. The image display apparatus is capable of obtaining brightness around the image display apparatus based on information output from a brightness sensor or an image-taking unit of the image display apparatus.

The displayed-information may be generated based on a result of character-recognition of a character contained in the taken-image.

With this configuration, the image display apparatus is capable of providing a dictionary or the like of recognized characters, i.e., displayed-information, to a user. As a result, the user may view a text through the no-display-area and refer to displayed-information displayed on the display-area at the same time.

The displayed-information may include route-navigation.

With this configuration, a user may refer to route-navigation when he is walking or driving a car or the like. With this configuration, as described above, because the no-display-area secures the user's view, the field of view is not blocked even if the user is moving, and it is thus possible to secure the user's safety.

The displayed-information may include production-assistance information.

With this configuration, a user is capable of referring to production-assistance information such as production procedure or measured results and producing a product at the same time. As a result, a user may master the way to produce a product in a shorter time, and accuracy and user-friendliness of production may be increased.

The displayed-information may include measured biological information on the user.

With this configuration, the image display apparatus is capable of displaying measured biological information on a user such as for example walking velocity, a pedometer, the heart rate, and the blood pressure to the user. The image display apparatus is thus capable of assisting a user's exercise.

The image display apparatus may further include a biological-information measuring unit measuring the biological information.

With this configuration, the image display apparatus is capable of displaying biological information measured by the biological-information measuring unit, i.e., displayed-information, to a user. Because a user wears the image display apparatus on his head, the biological-information measuring unit is capable of measuring the pulse, the body temperature, the breath pace, the posture, the psychology based on pupils, the brain wave, and the like, and displaying them as displayed-information.

An image display program according to another embodiment of the present technology includes an image generator and an image display unit.

The image generator generates a displayed-image, the displayed-image being divided into a no-display-area and a display-area, no image being displayed in the no-display-area, an image being displayed in the display-area.

The image display unit displays the displayed-image on a transmissive display to be disposed in front of an eye of a user.

In an image display method according to another embodiment of the present technology, an image generator generates a displayed-image, the displayed-image being divided into a no-display-area and a display-area, no image being displayed in the no-display-area, an image being displayed in the display-area.

An image display unit displays the displayed-image on a transmissive display to be disposed in front of an eye of a user.

### Effect of the Invention

As described above, according to the present technology, it is possible to provide an image display apparatus, an image display program, and an image display method capable of securing the user's view.

### Brief Description of Drawings

[Fig. 1] A schematic view showing an outer appearance of an image display apparatus according to an embodiment of the present technology.
[Fig. 2] A schematic view showing the functional configuration of the image display apparatus.
[Fig. 3] A flowchart showing the behavior of the image display apparatus.
[Fig. 4] An example of an original image obtained by an image obtaining unit of the image display apparatus.
[Fig. 5] An example of a mask layer, which is used to generate a displayed-image by an image generator of the image display apparatus.
[Figs. 6] Schematic views each showing how the image generator of the image display apparatus generates a displayed-image.
[Fig. 7] A schematic view showing the displayed-image generated by the image generator of the image display apparatus.
[Fig. 8] A schematic view showing a displayed-image D displayed on the display by the image display unit of the image display apparatus.
[Figs. 9] Schematic views each showing various kinds of positions of a no-display-area and a display-area of a displayed-image generated by the image generator of the image display apparatus.
[Figs. 10] Schematic views each showing various kinds of positions of a no-display-area and a display-area of a displayed-image generated by the image generator of the image display apparatus.
[Figs. 11] Schematic views each showing various kinds of positions of a no-display-area and a display-area of a displayed-image generated by the image generator of the image display apparatus.
[Figs. 12] Schematic views each showing various kinds of positions of a no-display-area and a display-area of a displayed-image generated by the image generator of the image display apparatus.
[Figs. 13] Schematic views each showing various kinds of positions of a no-display-area and a display-area of a displayed-image generated by the image generator of the image display apparatus.
[Figs. 14] Schematic views each showing various kinds of positions of a no-display-area and a display-area of a displayed-image generated by the image generator of the image display apparatus.

### Modes for Carrying Out the Invention

### [Configuration of image display apparatus]

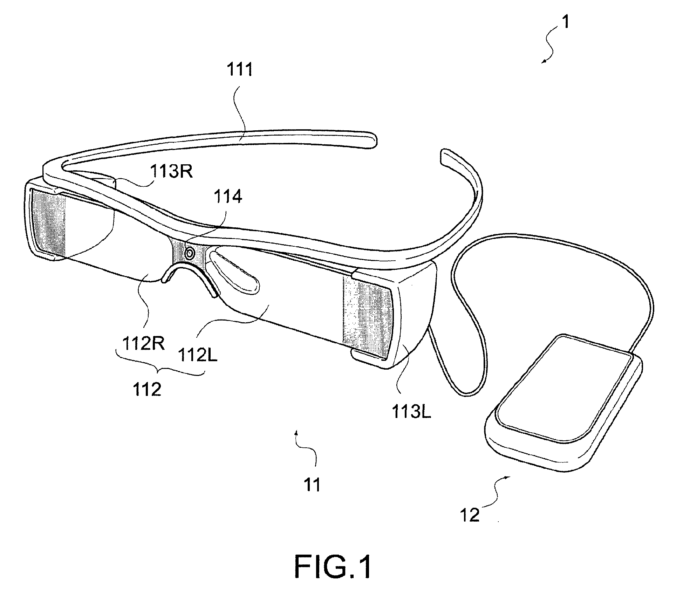

An image display apparatus according to an embodiment of the present technology will be described. Fig. 1 is a schematic view showing an outer appearance of an image display apparatus 1. As shown in Fig. 1, the image display apparatus 1 includes a head-mounted apparatus 11 and a control apparatus 12. The head-mounted apparatus 11 connects to the control apparatus 12 wiredly or wirelessly.

The head-mounted apparatus 11 is structured so as to be fit on the head of a user, includes displays to be disposed in front of the eyes of the user when he wears it on his head, and is configured to display images on the displays. Specifically, the head-mounted apparatus 11 includes a support 111, the displays 112 (112R and 112L), image generator units 113 (113R and 113L), and a camera 114.

The support 111 is structured to support the head-mounted apparatus 11 on a user's head and to touch the user's ears and nose. The support 111 has an arbitrary shape and is made of an arbitrary material.

The displays 112 are supported by the support 111, are to be disposed in front of the eyes of a user, and display images generated by the image generator units 113. The displays 112 may be transmissive displays, which are transparent and do not block the user's view when images are not displayed. Note that the displays 112 may not be completely transparent. As shown in Fig. 1, the displays 112 may be a right display 112R to be disposed in front of a user's right eye and a left display 112L to be disposed in front of a user's left eye, or may be an integrated display disposed in front of a user's eyes.

The image generator units 113 are supported by the support 111, generate images (hereinafter referred to as displayed-images) displayed on the displays 112, supply the displayed-images to the displays 112, and allow the displays 112 to display the displayed-images. Further, the image generator units 113 connect to the camera 114, and are configured to obtain images taken by the camera 114. As shown in Fig. 1, the image generator units 113 may be a right image generator unit 113R configured to supply displayed-images to the right display 112R, and a left image generator unit 113L configured to supply displayed-images to the left display 112L. Moreover, an integrated image generator unit 113 may be provided.

The camera 114 is supported by the support 111, and takes images. The camera 114 may be disposed such that the field of view thereof approximately coincides with a user's view when the user wears the head-mounted apparatus 11 on his head. For example, the camera 114 is preferably at the midway between the right display 112R and the left display 112L. Alternatively, the camera 114 may be independent of the image display apparatus 1.

The control apparatus 12 is operated by a user and receives input instructions to the head-mounted apparatus 11. The kind of the control apparatus 12 is not specifically limited, and may be an information processing apparatus such as a smartphone or a remote control. Moreover, the control apparatus 12 may function as an apparatus configured to supply images (hereinafter referred to as original images), based on which displayed-images are displayed on the displays 112, to the head-mounted apparatus 11. The control apparatus 12 supplies operation input by a user and original images (described later) to the image generator units 113.

The image display apparatus 1 may have the following configuration. Note that the configuration of the image display apparatus 1 is not limited to the above-mentioned configuration. For example, the head-mounted apparatus 11 may have the function of the control apparatus 12. Moreover, the image display apparatus 1 may include a biological-information measuring unit configured to measure a user's biological information (pulse, body temperature, breath pace, posture, psychology based on pupils, brain wave, etc.).

### [Functional configuration of image display apparatus]

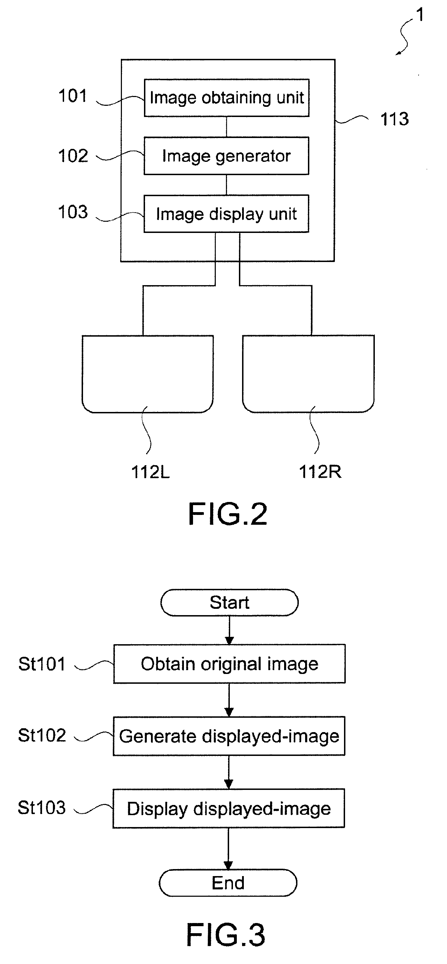

In the image display apparatus 1, the above-mentioned configuration and software cooperate to thereby realize the following functional configuration. Fig. 2 is a schematic view showing the functional configuration of the image display apparatus 1. As shown in Fig. 2, the image display apparatus 1 includes an image obtaining unit 101, an image generator 102, and an image display unit 103. Those configuration elements may be built in each image generator unit 113. The image display unit 103 connects to the display 112 (right display 112R, left display 112L). The image obtaining unit 101, the image generator 102, and the image display unit 103 connect to each other.

The image obtaining unit 101 obtains original images, based on which displayed-images displayed on the display 112 are generated. Examples of the original images include images generated by application software of the control apparatus 12, and images obtained from another apparatus by the control apparatus 12. The original image may be an image containing information (hereinafter referred to as displayed-information) displayed to a user such as, for example, subtitles of movies and automotive navigation.

The displayed-information contained in original images may be generated based on images taken by the camera 114. Specifically, the image obtaining unit 101 may be configured, if a taken-image contains characters, to recognize characters and to obtain an original image, which contains a dictionary of the recognized characters, as displayed-information. Moreover, the image obtaining unit 101 may be configured, if a taken-image contains a QR code (registered trademark) or the like, to read information and to obtain an original image containing the read information as displayed-information. The image obtaining unit 101 supplies the obtained original image to the image generator 102.

The image generator 102 generates a displayed-image based on the above-mentioned original image. The displayed-image includes a no-display-area, in which no image is displayed when a displayed-image is displayed on the display 112, and a display-area, in which an image is displayed when a displayed-image is displayed on the display 112. The image generator 102 overlaps a mask layer including an image-mask with an original image to thereby obtain a no-display-area, i.e., an area of the original image corresponding to the image-mask, and a display-area, i.e., an area of the original image not corresponding to the image-mask. The image generator 102 supplies the generated displayed-image to the image display unit 103.

The image display unit 103 supplies the displayed-image to the display 112, and displays the displayed-image on the display 112. In the displayed-image, no image is displayed in a no-display-area corresponding to an image-mask. Because the display 112 is a transmissive display, a user is capable of observing the environment through the no-display-area. Meanwhile, because the original image is displayed in the display-area, the user is capable of observing displayed-information contained in the original image. In other words, the user is capable of observing the environment through the no-display-area and referring to the displayed-information displayed on the displays 112 at the same time.

### [Behavior of image display apparatus]

The behavior of the image display apparatus 1 will be described. Fig. 3 is a flowchart showing the behavior of the image display apparatus 1.

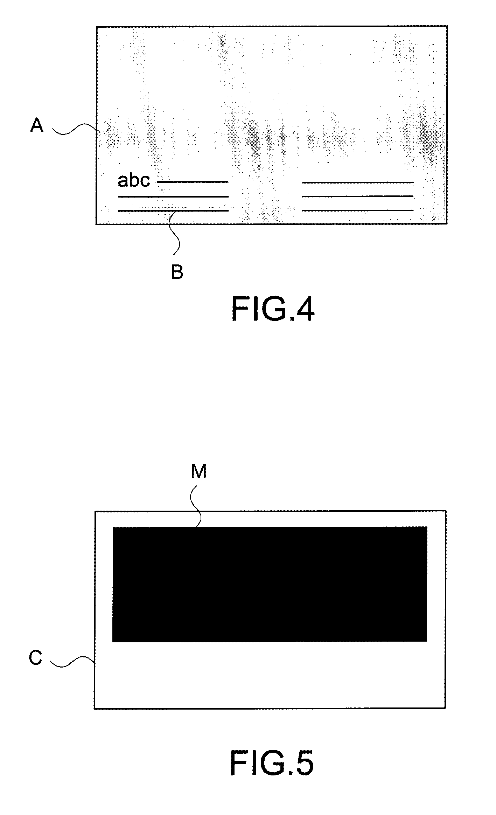

Firstly, The image obtaining unit 101 obtains an original image (St101). The image obtaining unit 101 is configured to obtain, as the original image, an image generated by application software of the control apparatus 12 or an image obtained by the control apparatus 12 from another apparatus. Fig. 4 shows an original image A, which is an example of an obtained original image. The original image A contains displayed-information B, which is to be displayed to a user.

Next, the image generator 102 generates a displayed-image (St102). The image generator 102 is configured to overlap a mask layer with the original image A to thereby generate the displayed-image. Fig. 5 is a schematic view showing a mask layer C. As shown in Fig. 5, the mask layer C includes an image-mask M. The position of the image-mask M in the mask layer may be arbitrarily changed depending on purposes of the image display apparatus 1 as described later.

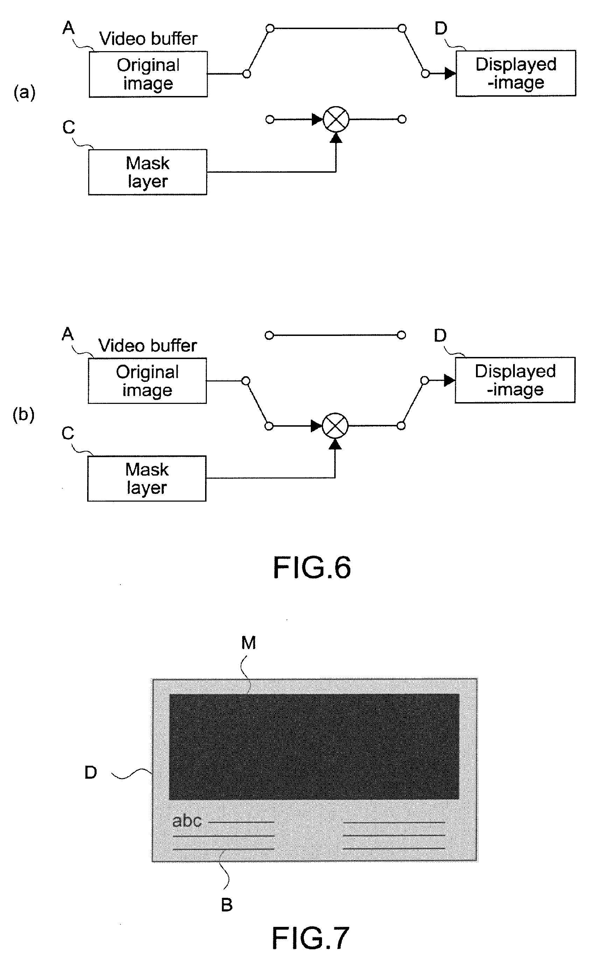

Figs. 6 are schematic views showing how the image generator 102 generates a displayed-image. Fig. 6(a) is a schematic view showing a state where the mask layer C is overlapped, and Fig. 6(b) is a schematic view showing a state where the mask layer C is not overlapped. As shown in Fig. 6(a), if the mask layer C is not overlapped with the original image A, the image generator 102 outputs the original image A as it is as a displayed-image D. To the contrary, in this embodiment, as shown in Fig. 6(b), the image generator 102 overlaps the mask layer C with the original image A, and generates the displayed-image D. Here, as shown in Figs. 6, the image generator 102 overlaps the mask layer C with the original image A output from a video buffer. As a result, the image generator 102 is capable of forcibly applying the image-mask M to the original image A, irrespective of the kind of application software which generates the image.

Fig. 7 is a schematic view showing the displayed-image D generated by the image generator 102. As shown in Fig. 7, the image generator 102 overlaps the mask layer C with the original image A. As a result, the displayed-image D is generated, in which the image-mask M covers part of the original image A. The image generator 102 supplies the displayed-image D to the image display unit 103.

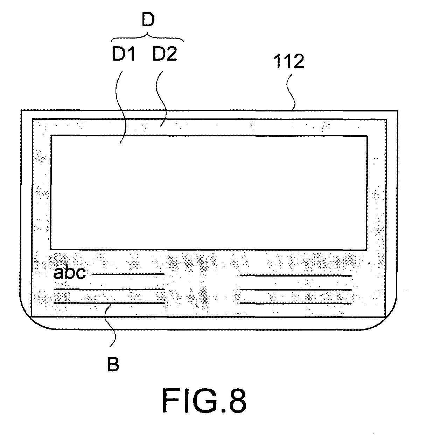

The image display unit 103 displays the displayed-image D on the display 112 (St103). Fig. 8 is a schematic view showing a displayed-image D displayed on the display 112. As shown in Fig. 8, in the displayed-image D, the area corresponding to the image-mask M is a no-display-area (no-display-area D1), in which no image is displayed, and the area not corresponding to the image-mask M is a display-area (display-area D2), in which the original image A is displayed. Because the display 112 is a transmissive display, a user is capable of observing the environment through the no-display-area D1 and observing the displayed-information B displayed in the display-area D2 at the same time.

When the displayed-image D is displayed on the display 112, the image display unit 103 may display the displayed-image D as a semi-transmissive image. As a result, a user is capable of observing the environment through the original image A, i.e., a semi-transmissive image, displayed in the display-area D2. Further, the image display unit 103 may be configured to obtain brightness around the image display apparatus 1 from a not-shown brightness sensor of the image display apparatus 1 or brightness output from the camera 114, and to control the transmittance of the displayed-image D depending on the brightness.

Note that, in the above description, the displayed-image D displayed on one of the right display 112R and the left display 112L has been described. The same applies to the other display 112. Moreover, for example, the image display apparatus 1 may be configured to display the displayed-image D on one display 112, and to display no image on the other display 112. Moreover, the image display apparatus 1 may be configured to display the displayed-image D on one display 112, and to display the original image A as it is on the other display.

### [Position of no-display-area]

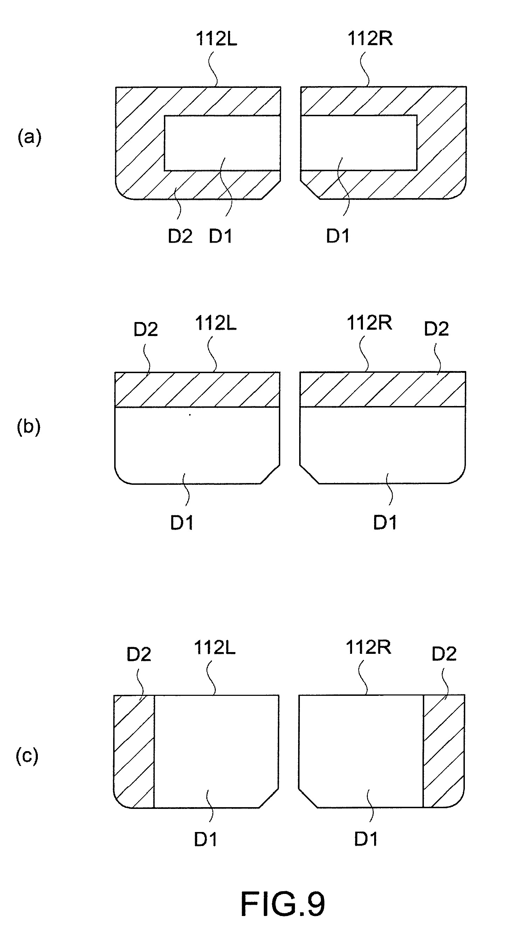

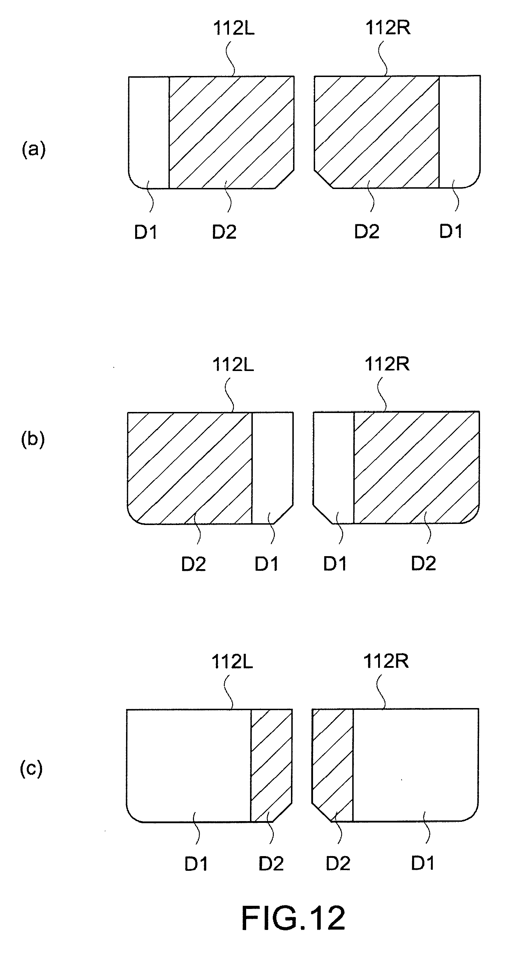

In the above description, the displayed-image D contains the no-display-area D1 and the display-area D2. Various kinds of positions of the no-display-area D1 and the display-area D2 may be adopted. Figs. 9 to Figs. 14 are schematic views each showing various kinds of positions of the no-display-area D1 and the display-area D2. Note that the displayed-information B is not shown in Figs. 9 to Figs. 14, but the displayed-information B is actually displayed in the display-area D2. As shown in those diagrams, the positions of the no-display-area D1 and the display-area D2 may be arbitrarily selected, i.e., may be selected as specified by a user or as specified by application software, for example.

### [Examples of use of image display apparatus]

When a user watches a movie, performing arts (opera, kabuki, drama, etc.), and the like, the image display apparatus 1 may display dialogue, i.e., the displayed-information B, on the right and left portions of the displays 112 depending on the positions of the casts, or may display narration, lyrics, and the like on the upper portions or the lower portions of the displays 112 (see Fig. 9(a) to Fig. 10(b)). In the image display apparatus 1, the no-display-area D1 may be the center portion of the displayed-image D so as not to block visual recognition of a movie or performing arts.

The image display apparatus 1 changes the transmittance of a displayed-image displayed in the display-area D2 around the no-display-area D1 depending on brightness of performing arts or the like, which may increase visibility of the displayed-image. Moreover, because brightness largely changes depending on scenes in some movies and the like, the image display apparatus 1 may change the transmittance of the displayed-image D depending on the brightness of scenes effectively. The image display apparatus 1 may be configured to use predetermined fixed values to control the transmittance, or to use brightness obtained by a brightness sensor to control the transmittance.

The image display apparatus 1 may be configured to display a dictionary of words or Chinese characters, which a user does not know, as the displayed-information B, when he reads a book. Moreover, the image display apparatus 1 may be configured to display an advertisement depending on content. The image display apparatus 1 arranges the display-areas D2 in the upper and lower portions when a horizontally-written book is displayed, and in the right and left portions when a vertically-written book is displayed, which does not bother a user reading the book. When a user watches a wide area of a magazine or the like at a time, the image display apparatus 1 arranges the display-areas D2 in the peripheries of the displays 112 (see Fig. 9(a) to Fig. 10(b)).

The image display apparatus 1 is capable of recognizing characters contained in an image taken by the camera 114, and displaying a dictionary automatically. Moreover, the image display apparatus 1 is configured to automatically read a QR code (registered trademark) on a magazine or the like, and to display information, which a reader wants to know, as the displayed-information B. A user may use the no-display-areas D1 at the center portions to read a book. If a user wants to concentrate on his reading, the transmittance of the displayed-image D may be decreased to limit the visibility.

The image display apparatus 1 may be configured, when a user drives a car, rides a bicycle, rides a motorcycle, or the like, to display images displayed on wing mirrors in the right and left portions of the displays 112, an image displayed on a rearview mirror in the upper portions, an image taken by a rearview camera in the lower portions, and the like, as a function to support a user to recognize the circumference (see Fig. 9(a) to Fig. 10(b)). The image display apparatus 1 may be configured to control the transmittance by using variable filters such that a user may observe the displayed-image D. The image display apparatus 1 displays a vertically-movable bar graph or the like in the right and left portions, whereby a user may feel the velocity or the engine speed of a car or the like. Numerical values are displayed in the upper and lower portions of the displays 112, whereby the user may recognize accurate values. Moreover, the image display apparatus 1 displays a route-navigation arrow and the like in the right and left portions of the displays 112, and displays a horizontal map in the lower portions of the displays 112. As a result, a user may use route-navigation without changing the direction of gaze.

The image display apparatus 1 may be configured to display measured values (biological information) of the velocity, a pedometer, the heart rate, the blood pressure, the blood flow, and the like in the upper, lower, right, and left portions of the displays 112 (see Fig. 9(a) to Fig. 10(b)) when a user exercises, i.e., rides a bicycle, runs, and walks. Moreover, the image display apparatus 1 may include a biological-information measuring unit configured to measure biological information on a user, and may be configured to display measured biological information, e.g., pulse, body temperature, breath pace, posture, psychology based on pupils, brain wave, and the like, on the displays 112. The image display apparatus 1 is capable of controlling transmittance by using variable filters such that the displayed-image D is observable. The image display apparatus 1 is capable of controlling transmittance by using a brightness sensor with consideration of time information if brightness changes between daytime and nighttime or the like. The image display apparatus 1 displays a route-navigation arrow and the like in the right and left portions of the displays 112, and displays a horizontal map in the lower portions of the displays 112. As a result, a user may use route-navigation without changing the direction of gaze.

The image display apparatus 1 may be configured, when a user produces a product, to display production-assistance information such as production procedure and measured results on the displays 112, to thereby assist a user producing a product. Specifically, information such as procedure is displayed on the displays 112 without applying the image-masks M when a user confirms production procedure, and the image-masks M are arranged in the areas necessary for work when the user starts working, whereby the user may observe those areas with ease. For example, when users build up an airplane, users confirm wiring to be connected based on information displayed on the displays 112. When the users connect wiring, the image-masks M are disposed at the center portions of the displays 112 and the displays 112 are completely transmissive such that the displayed information may not disturb their work. As a result, the reliability of the work may be increased. Moreover, in a test process of a television receiver, a user operates a television receiver and checks measured results at the same time. At this time, the image-masks M may be disposed at the center portions of the displays 112 such that a user may operate a television receiver easily, and measured results may be displayed at the sides of the displays 112.

When a user operates an image-taking apparatus such as a camera or a video to take an image, he gases an object through an optical viewfinder of the image-taking apparatus or watches a display screen of the image-taking apparatus to take an image. At this time, he is not possible to see the object with the naked eye. To solve this problem, the image display apparatus 1 displays an image taken by the image-taking apparatus at the center portions of the displays 112. As a result, the user is capable of confirming an area whose image is to be taken actually and taking the image at the same time.

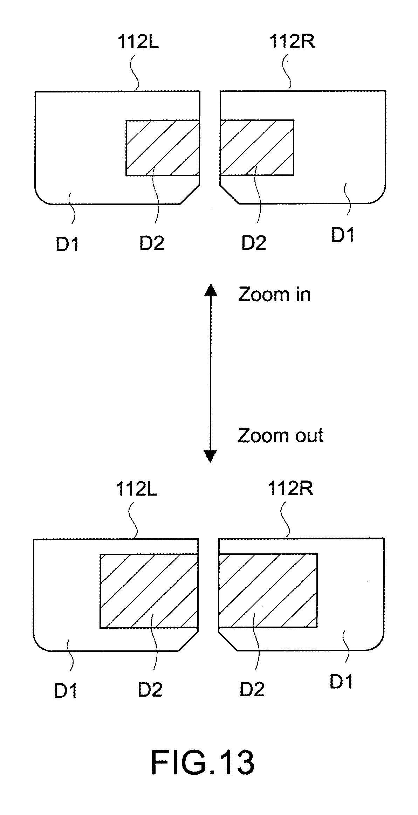

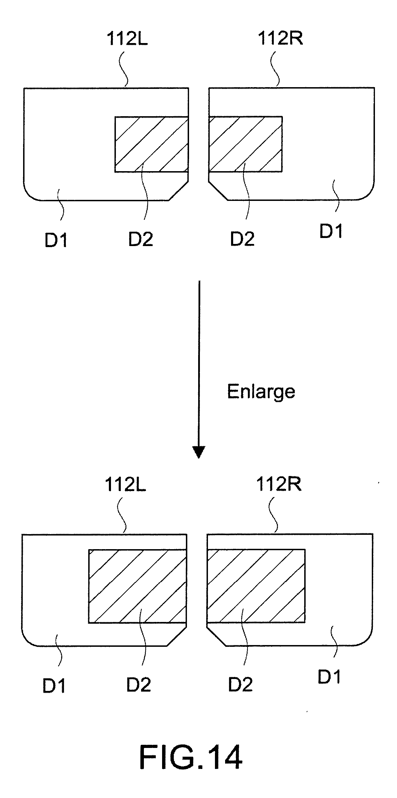

The image display apparatus 1 is configured, when a user uses a zoom function and determines the composition, to measure the distance to an object by using a sensor, and to dispose a taken-image at the center portions of the displays 112. As a result, the user may confirm the area whose image is to be taken out of the entire field of view and decide the optimum composition at the same time (see Figs. 13). Moreover, the image display apparatus 1 displays an enlarged image of the area that a user looks at on the display-area D2, whereby the user is capable of gazing a distant object certainly and taking an image thereof (see Figs. 14).

A camera may be independent of the image display apparatus 1, or the image display apparatus 1 may include a camera. If a camera is independent of the image display apparatus 1, a user is always capable of confirming a taken-image while he takes a look-around. Moreover, the image display apparatus 1 may cause a camera to follow the direction of the eyes of a user, and take an image of the direction of the eyes that the camera follows. If the image display apparatus 1 includes a camera, the camera is capable of taking an image of the direction of the eyes. An image is zoomed-in and taken, and the enlarged image is displayed, whereby a telescopic image-taking effect may be obtained.

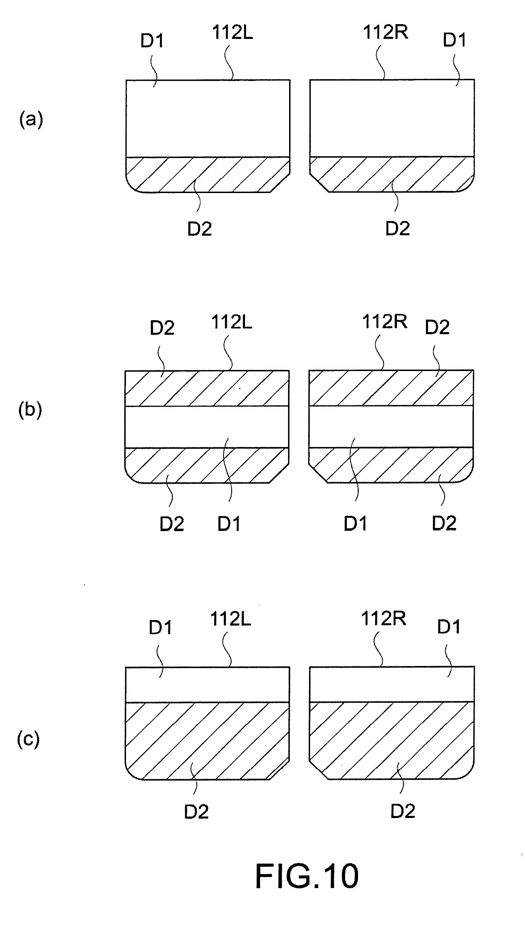

A dying battery of a camera, memory shortage of a recordable medium, and the like are pieces of important information which may lead to failure of image-taking. The image display apparatus 1 displays such information on the displays 112 as displayed-information, whereby a user is capable of knowing such information without constantly looking at a camera/video or constantly gazing an object through a viewfinder. If a user gazes a distant object for a long time such as bird-watching, the image display apparatus 1 displays an enlarged image where the upper portions of the displays 112 are no-display-areas D1 and the lower portions out of the user's view are display-areas D1 (see Fig. 10(c)). As a result, user-friendliness is increased.

When a user observes celestial bodies, he may pull his gaze up. So the image display apparatus 1 may arrange the no-display-areas D1 in the upper portions of the displays 112 and the display-areas D2 in the lower portions out of the user's view. The image display apparatus 1 may be configured to display information on constellations and auroras as displayed-information (see Fig. 10(c)).

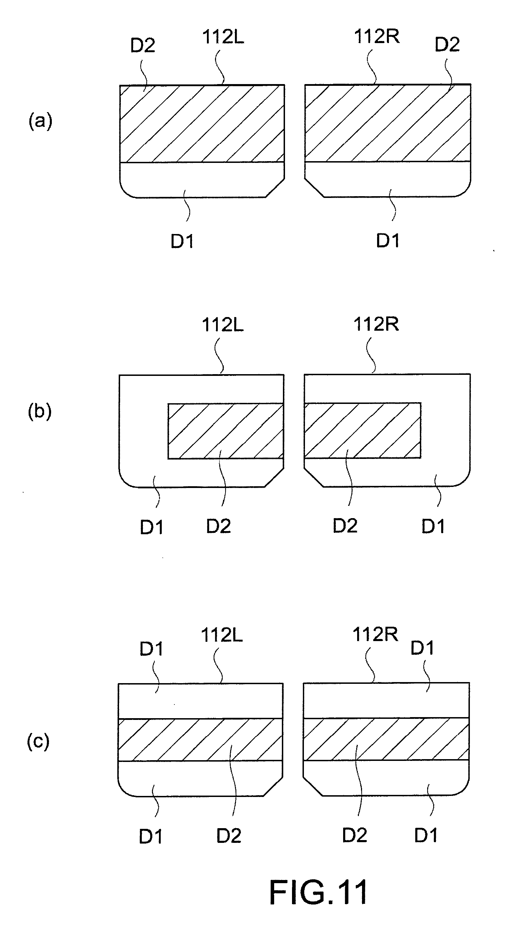

Moreover, if a user does some fishing or watches a sport, the user may lower his gaze. So the image display apparatus 1 may arrange the display-areas D2 in the upper portions of the displays 112, and the no-display-areas D1 in the lower portions (see Fig. 11(a)). If a user does some fishing, he may refer to displayed-information, i.e., weather, a tidal table, and a fish detector. If a user watches a sport, he may watch a sport while he watches displayed-information information, i.e., TV broadcasting, the score, or the like.

The present technology is not limited to the above-mentioned embodiments, but may be changed within the gist of the present technology.

Note that the present technology may employ the following configurations.

### (1)

An image display apparatus, comprising:
a transmissive display to be disposed in front of an eye of a user;
an image generator generating a displayed-image, the displayed-image being divided into a no-display-area and a display-area, no image being displayed in the no-display-area, an image being displayed in the display-area; and
an image display unit displaying the displayed-image on the transmissive display.

### (2)

The image display apparatus according to (1), wherein
the image generator overlaps a mask layer with an original image to thereby generate the displayed-image, the original image including displayed-information displayed to a user.

### (3)

The image display apparatus according to (1) or (2), further comprising:
an image-taking unit capable of taking an image to thereby obtain a taken-image, wherein
the displayed-information is generated based on the taken-image.

### (4)

The image display apparatus according to any one of (1) to (3), wherein
the image generator generates a semi-transmissive image as the displayed-image.

### (5)

The image display apparatus according to any one of (1) to (4), wherein
the image generator changes transmittance of the displayed-image depending on brightness around the image display apparatus.

### (6)

The image display apparatus according to any one of (1) to (5), wherein
the displayed-information is generated based on a result of character-recognition of a character contained in the taken-image.

### (7)

The image display apparatus according to any one of (1) to (6), wherein
the displayed-information includes route-navigation.

### (8)

The image display apparatus according to any one of (1) to (7), wherein
the displayed-information includes production-assistance information.

### (9)

The image display apparatus according to any one of (1) to (8), wherein
the displayed-information includes measured biological information on the user.

### (10)

The image display apparatus according to any one of (1) to (9), further comprising:
a biological-information measuring unit measuring the biological information.

### (11)

An image display program, causing a computer to function as:
an image generator generating a displayed-image, the displayed-image being divided into a no-display-area and a display-area, no image being displayed in the no-display-area, an image being displayed in the display-area; and
an image display unit displaying the displayed-image on a transmissive display to be disposed in front of an eye of a user.

### (12)

An image display method, comprising:
generating, by an image generator, a displayed-image, the displayed-image being divided into a no-display-area and a display-area, no image being displayed in the no-display-area, an image being displayed in the display-area; and
displaying, by an image display unit, the displayed-image on a transmissive display to be disposed in front of an eye of a user.

Description of Reference Numerals
- 1: image display apparatus
- 101: image obtaining unit
- 102: image generator
- 103: image display unit
- 112: display
- 114: camera

## Claims

1. An image display apparatus, comprising:
a transmissive display to be disposed in front of an eye of a user;
an image generator generating a displayed-image, the displayed-image being divided into a no-display-area and a display-area, no image being displayed in the no-display-area, an image being displayed in the display-area; and
an image display unit displaying the displayed-image on the transmissive display.

2. The image display apparatus according to claim 1, wherein
the image generator overlaps a mask layer with an original image to thereby generate the displayed-image, the original image including displayed-information displayed to a user.

3. The image display apparatus according to claim 2, further comprising:
an image-taking unit capable of taking an image to thereby obtain a taken-image, wherein
the displayed-information is generated based on the taken-image.

4. The image display apparatus according to claim 1, wherein
the image generator generates a semi-transmissive image as the displayed-image.

5. The image display apparatus according to claim 4, wherein
the image generator changes transmittance of the displayed-image depending on brightness around the image display apparatus.

6. The image display apparatus according to claim 3, wherein
the displayed-information is generated based on a result of character-recognition of a character contained in the taken-image.

7. The image display apparatus according to claim 2, wherein
the displayed-information includes route-navigation.

8. The image display apparatus according to claim 2, wherein
the displayed-information includes production-assistance information.

9. The image display apparatus according to claim 2, wherein
the displayed-information includes measured biological information on the user.

10. The image display apparatus according to claim 9, further comprising:
a biological-information measuring unit measuring the biological information.

11. An image display program, causing a computer to function as:
an image generator generating a displayed-image, the displayed-image being divided into a no-display-area and a display-area, no image being displayed in the no-display-area, an image being displayed in the display-area; and
an image display unit displaying the displayed-image on a transmissive display to be disposed in front of an eye of a user.

12. An image display method, comprising:
generating, by an image generator, a displayed-image, the displayed-image being divided into a no-display-area and a display-area, no image being displayed in the no-display-area, an image being displayed in the display-area; and
displaying, by an image display unit, the displayed-image on a transmissive display to be disposed in front of an eye of a user.

## Amended claims

### Amended claims under Art. 19.1 PCT

1. An image display apparatus, comprising:
a transmissive display to be disposed in front of an eye of a user;
an image generator generating a displayed-image, the displayed-image being divided into a no-display-area and a display-area, no image being displayed in the no-display-area, the user being capable of observing outside through the no-display-area, an image being displayed in the display-area; and
an image display unit displaying the displayed-image on the transmissive display, wherein
the image generator generates the displayed-image including a no-display-area, the no-display-area being part of an original image to be displayed to a user.

2. The image display apparatus according to claim 1, wherein
the size and the position of the no-display-area are arbitrarily selected, the mask layer being overlapped with the no-display-area.

3. The image display apparatus according to claim 1, further comprising:
an image-taking unit capable of taking an image to thereby obtain a taken-image, wherein
the displayed-information is generated based on the taken-image.

4. The image display apparatus according to claim 1, wherein
the image generator generates a semi-transmissive image as the displayed-image.

5. The image display apparatus according to claim 4, wherein
the image generator changes transmittance of the displayed-image depending on brightness around the image display apparatus.

6. The image display apparatus according to claim 1, wherein
the displayed-information is generated based on a result of character-recognition of a character contained in the taken-image.

7. The image display apparatus according to claim 1, wherein
the displayed-information includes route-navigation.

8. The image display apparatus according to claim 1, wherein
the displayed-information includes production-assistance information.

9. The image display apparatus according to claim 1, wherein
the displayed-information includes measured biological information on the user.

10. The image display apparatus according to claim 1, further comprising:
a biological-information measuring unit measuring the biological information.

11. An image display program, causing a computer to,
by an image generator generating a displayed-image, the displayed-image being divided into a no-display-area and a display-area, no image being displayed in the no-display-area, the user being capable of observing outside through the no-display-area, an image being displayed in the display-area, and generating the displayed-image including a no-display-area, the no-display-area being part of an original image to be displayed to a user,
display the displayed-image on an image display unit of a transmissive display to be disposed in front of an eye of a user.

12. An image display method, comprising:
generating, by an image generator, a displayed-image, the displayed-image being divided into a no-display-area and a display-area, no image being displayed in the no-display-area, the user being capable of observing outside through the no-display-area, an image being displayed in the display-area; and
displaying, by an image display unit, the displayed-image on a transmissive display to be disposed in front of an eye of a user.
